# FASCICULE DE BREVET EUROPEEN

(11) **EP 2 661 542 B1**
(45) Date de publication et mention de la délivrance du brevet: **03.06.2020**
(21) Numéro de dépôt: 11817404.4
(22) Date de dépôt: 20.12.2011
(51) Int. Cl.: F01D 5/22, F01D 5/26, F01D 5/30, F01D 11/00

(54) **ROUE DE TURBINE A GAZ AVEC AMORTISSEUR DE VIBRATION**
ROTORSCHEIBE EINER GASTURBINE MIT SCHWINGUNGSDÄMPFER
GAS-TURBINE ROTOR DISK WITH VIBRATION DAMPER

(30) Priorité: 04.01.2011 FR 1150042
(43) Date de publication de la demande: 13.11.2013
(73) Titulaire: Safran Helicopter Engines, 64510 Bordes (FR)
(72) Inventeur: SAHORES, Jean-Luc, Pierre, F-64110 Mazeres-Lezons (FR); BEAUCOUESTE, Michel, François, Léon, F-64800 Arthez D'asson (FR)
(74) Mandataire: Gevers & Orès
(86) Numéro de dépôt international: PCT/FR2011/053067
(87) Numéro de publication internationale: WO 2012/093217

(56) Documents cités:
- EP-A1- 0 437 977
- EP-A1- 0 709 549
- EP-A2- 0 816 638
- EP-A2- 1 635 037
- EP-A2- 2 009 247
- FR-A1- 2 376 958
- US-A- 3 037 741
- US-A- 5 513 955

## Description

### DOMAINE TECHNIQUE

L'invention concerne un procédé d'amortissement de pales montées sur des roues de turbine à gaz, ainsi qu'un amortisseur de vibration apte à mettre en œuvre ce procédé. L'invention s'applique en particulier aux roues de turbine de turbomachine, mais peut s'appliquer également aux soufflantes ou aux compresseurs basse pression à pales rapportées.

Une turbine à gaz comporte au moins une turbine d'entraînement d'un compresseur, lequel délivre de l'air comprimé en entrée de la chambre de combustion. Les aubes des rotors mobiles constituant les étages de la turbine subissent une élévation importante en température par contact avec les gaz chauds sortant de la chambre après combustion. Les gaz chauds circulent alors dans une veine canalisée par un conduit annulaire, et entrainent en rotation les aubes des rotors de la turbine disposées dans cette veine.

Les aubes et la périphérie des disques sur lesquels elles sont agencées nécessitent donc un refroidissement énergique. Les moyens de refroidissement des aubes sont généralement formés par un flux d'air circulant dans de circuits de refroidissement internes aux aubes. L'air de refroidissement provient de l'extérieur et/ou d'une fraction de l'air d'un étage du compresseur associée à un étage de la turbine. Une circulation d'air autour des disques permet également de refroidir la face aval de ceux-ci.

### ETAT DE LA TECHNIQUE

La présence de ces flux gazeux et l'excitation dynamique de la rotation des pales créent des phénomènes de vibration. Pour limiter ces vibrations, les aubes sont équipées d'amortisseurs en appui sous des plateformes des pales, les plateformes formant la méridienne interne de la veine d'air au niveau du rotor.

Ces amortisseurs se présentent en général sous la forme de petites tôles embouties avec des bords tombés plus ou moins importants et l'énergie générée par le mouvement des pales et des plateformes en vibration est dissipée par frottement de ces tôles contre les plateformes. Dans leurs mouvements, les tôles sont plaquées contre les plateformes par les forces centrifuges, le phénomène de frottement alternant entre phases de glissement et phases d'adhérence aux plateformes. Plus l'adaptation entre l'amortisseur et la plateforme est assurée, meilleur est l'amortissement. De tels amortisseurs élastiques à friction sont décrits par exemple dans le document de brevet FR2503247 et EP1635037.

L'épaisseur de la tôle, de l'ordre de 0,2 à 0,7 mm, est choisie en fonction des conditions vibratoires de la pale et de l'excitation dynamique qu'elle peut subir, en particulier au regard de sa vitesse de résonance. Une masse optimale est définie pour amortir une résonance précise de chaque contexte vibratoire, compte tenus du type de résonance de la turbine ainsi que de la gamme de vitesses de rotation de la turbine et d'autres critères de conception (géométrie, matériau, etc.). En particulier, dans le cas de turbines lentes ou de flux d'air de basses pressions, la masse optimale est sensiblement supérieure à celle des turbines rapides.

Ainsi, dans les turbomoteurs puissants à turbine libre multi-étages, peu chargée mécaniquement, les vitesses des turbines dites lentes (en dessous de 30 000 tr/min) sont sensiblement inférieures aux vitesses plus rapides des turbines mono-étage (environ de 35 à 45 000 tr/min). De plus, les turbines bi-étages ont des pales plus élancées et plus nombreuses (par exemple de 40 à 60 pales), et donc moins d'espace inter plateformes entre ces pales.

Il devient donc de plus en plus difficile d'atteindre la masse optimale avec cette technologie et donc de piloter les forces de frottement. De plus, l'utilisation de tôle d'épaisseur plus importante, par exemple supérieure à 1 mm, lorsque les cavités de logement le permettent, nuit à la dissipation de l'énergie ainsi qu'à la souplesse de la tôle, c'est-à-dire à sa capacité à se déformer sous champ centrifuge, donc à sa qualité de frottement et d'absorption des vibrations. L'apparition de points d'usure très localisée, sous les plateformes, confirment alors la mauvaise répartition des zones de contact entre les amortisseurs et les plateformes.

Dans ces conditions, une incompatibilité peut être relevée entre le respect de la masse optimale qui, définie par le contexte vibratoire, tend à augmenter de manière général au regard des turbines lentes et la souplesse de l'amortisseur ainsi que sa qualité au frottement. En effet, l'utilisation de tôles de plus en plus épaisses, logées dans des espaces réduits entre plateformes dans le cas des turbines lentes, conduit alors à une dégradation de la souplesse de l'amortisseur et de l'adaptation au contact aube/amortisseur et donc de l'amortissement induit.

### EXPOSÉ DE L'INVENTION

L'invention vise à lever cette incompatibilité en fournissant des amortisseurs de masse optimale apte à amortir une résonance selon un contexte vibratoire de la turbine, en particulier pour des turbines lentes, tout en favorisant une souplesse d'adaptation aux surfaces d'appui des logements des amortisseurs. Pour ce faire, l'invention prévoit de séparer les fonctions de masse et de souplesse.

Plus précisément, la présente invention a pour objet, bien qu'il ne soit pas revendiqué, un procédé d'amortissement de pales montées sur des disques de roue lente de turbine à gaz, la turbine présentant des logements sous des plateformes de pales, aptes à recevoir des amortisseurs de vibration. Le procédé consiste à réaliser de manière indépendante une partie souple de plaquage contre la plateforme et une partie masse de concentration des efforts pour le pilotage des forces de frottement contre la plateforme via le plaquage, à coupler les deux parties ensemble de manière réversible et à insérer les amortisseurs ainsi constitués en deux parties dans les logements dédiés.

Le couplage des deux parties est formé en enveloppant au moins partiellement la partie masse par au moins une zone de plaquage de la partie souple contre la plateforme. La partie souple est suffisamment flexible pour s'adapter au niveau de contact requis, par exemple pour compenser un positionnement non parfait, pour s'adapter à la dispersion des géométries sous plateforme de pale en pale ou pour neutraliser les tolérances de fonderie. La partie masse peut être changée par une autre masse de matériau différent ou peut être augmentée par ajout d'une masse supplémentaire en cas de déficit d'amortissement.

L'invention se rapporte a une roue de turbine à gaz selon la revendication 1 comprenant un amortisseur de vibration. Un tel amortisseur comporte un plateau et au moins une masselotte, le plateau étant embouti à partir d'une tôle d'épaisseur sensiblement plus fine que celle de la masselotte. Ce plateau présente une paroi apte à venir en contact souple avec au moins une plateforme de pale, en particulier avec les plateformes de deux pales adjacentes, tout en enveloppant au moins partiellement une face de la masselotte.

Selon des modes de réalisation préférés :
- le matériau du plateau est plus tendre que celui de la surface d'appui sur laquelle il est apte à venir en contact ajusté ;
- le plateau présente au moins deux bras recourbés aptes à enserrer la masselotte ;
- la masselotte comporte deux piles reliés par une portion centrale, la portion centrale étant apte à accueillir les bras de serrage du plateau ;
- le plateau a une épaisseur comprise entre 0,1 et 0,6 mm et la masselotte entre 1 à 6 mm, de préférence entre 2 et 3mm.

### BREVE DESCRIPTION DES FIGURES

D'autres caractéristiques et avantages de l'invention apparaîtront à la lecture de la description détaillée d'exemples de réalisation ci-après, en référence aux figures annexées qui représentent, respectivement :
- La figure 1, une vue en coupe longitudinale globale d'un exemple de roue de turbine équipée d'amortisseurs selon l'invention ;
- les figures 2a et 2b, un exemple d'amortisseur selon l'invention comportant une masselotte et un plateau respectivement en vue perspective et en vue de dessous ; et
- la figure 3, une vue perspective partielle d'une roue de turbine équipée d'amortisseurs selon l'invention.

### DESCRIPTION DETAILLEE D'UN MODE DE REALISATION

En référence aux figures, les termes « avant » et « arrière » se rapportent aux éléments « amont » et « aval » au regard du sens défini par l'axe central de rotation X'X.

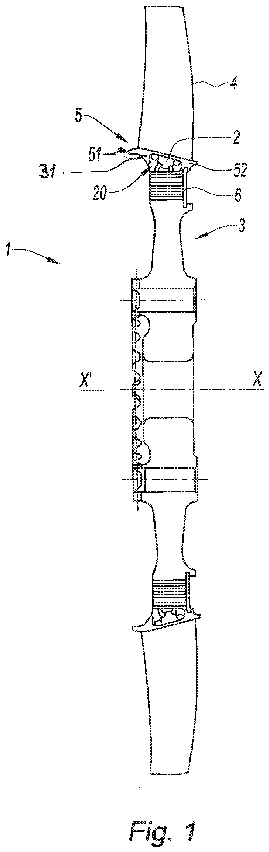

La figure 1 illustre, de manière générale, la vue en coupe d'une roue de turbine libre 1, intégrant des amortisseurs 2 selon l'invention. La roue 1 présente une répétitivité cyclique selon l'axe de la turbine X'X et comporte un disque central 3 sur lequel sont montées en périphérie les pieds de sapin des pales 4. Entre les pieds de sapin et les profils aérodynamiques des pales 4 se positionnent les plateformes 5, les pieds étant insérés dans des alvéoles de la périphérie du disque 3 de forme complémentaire de celle des pieds. Des plaquettes de freinage 31 des pales sont insérées pour bloquer les pieds dans leurs alvéoles. Ces plaquettes peuvent avantageusement être remplacées selon les architectures par d'autres systèmes de freinage axial tels que les fils freins, les rivets, joncs ou flasques ou équivalents.

Chaque amortisseur 2 est intégré dans un logement 20 limité par une plateforme 5, deux échasses de pied de pale adjacentes 4 et une plaquette arrière 31. La plateforme 5 présente un profil formant en extrémité axiale des renforts de blocage axiaux avant et arrière 51 et 52 de l'amortisseur 2 dans son logement.

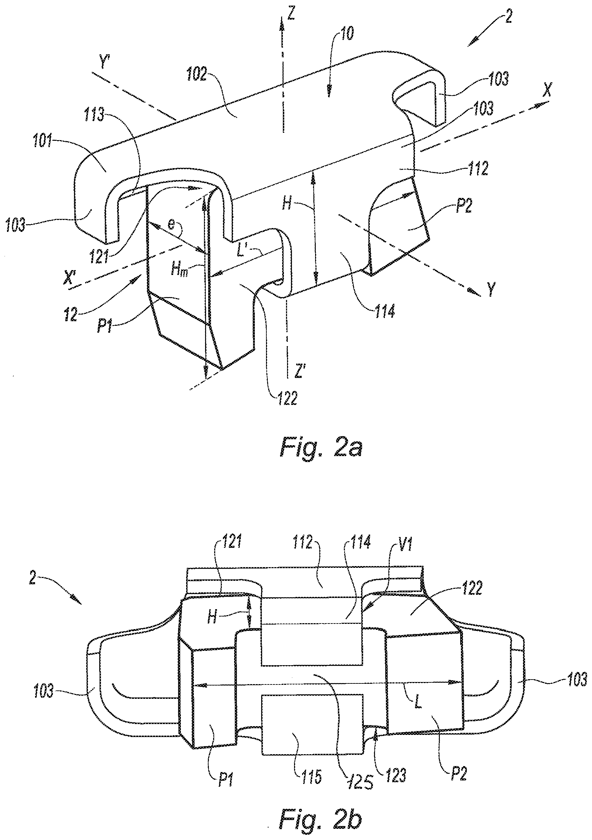

En référence aux vues des figures 2a et 2b, un exemple d'amortisseur 2 de turbine selon l'invention se présente plus précisément sous la forme de la combinaison d'un plateau 10 de faible épaisseur, ici 0,2 mm, et d'une masselotte 12 d'épaisseur sensiblement plus importante, ici 3 mm selon son épaisseur transversale « e » et 5 à 6 mm selon sa hauteur « H » en sa partie centrale.

Le plateau 10 forme une fine paroi qui recouvre partiellement la masselotte 12, et en particulier quasiment toute la face dite supérieure 121 de celle-ci. La hauteur maximale Hm de l'ensemble plateau - masselotte et la forme globale de cet ensemble est déterminée pour qu'il reste en position entre les renforts 51 et 52 de la plateforme 2 (cf. Figure 1).

La masselotte 12 est repérée dans un référentiel propre qui est défini par sa position dans le disque de la turbine : sa hauteur centrale « H » se rapporte radialement à un diamètre Z'Z du disque, sa longueur « L » est parallèle à l'axe X'X de rotation de la turbine et son épaisseur transversale « e » est portée par la tangente Y'Y, au point de contact du secteur annulaire de circonférence du disque où sera logée la masselotte. Les terminologies de type « supérieur », « inférieur », « latéral » ou encore « amont » et « aval » se rapportent au référentiel de la masselotte.

La masselotte possède globalement une forme d'arche, comportant deux piles P1 et P2 reliées par une voûte V1 dont la partie supérieure coïncide avec la face supérieure 121 de la masselotte. La hauteur de la voûte V1 entre sa face supérieure 121 et sa face inférieure 125 définit l'épaisseur de la masselotte 12 en sa partie centrale.

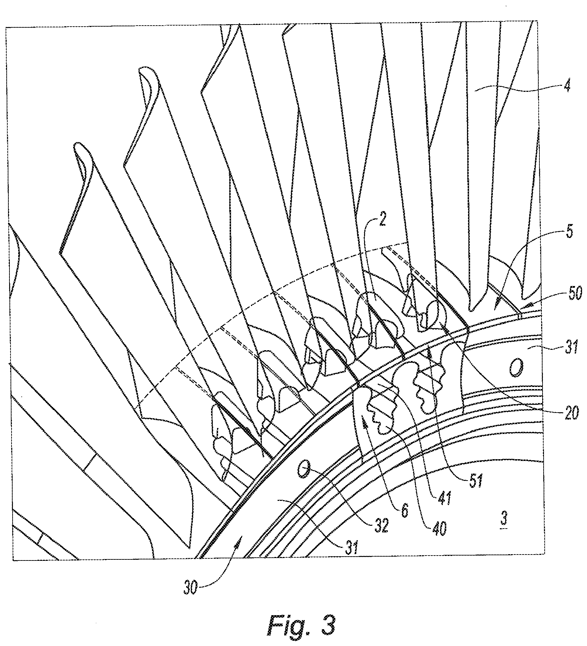

Le plateau 10 présente également une paroi supérieure 101 agencée sur la face supérieure 121 de la masselotte 12. La face supérieure 102 de cette paroi 101 sera plaquée contre la plateforme 5 de la pale sous le champ centrifuge, une fois la masselotte 10 insérée dans son logement (voir la description en référence à la figure 3) et la turbine en fonctionnement nominal. L'épaisseur de la paroi 101 est ajustée à 0,2 mm pour que ce contact soit suffisamment élastique, la paroi pouvant se déformer sans nuire à son élasticité.

La face supérieure du plateau 10 est de forme sensiblement rectangulaire. Elle présente deux échancrures d'adaptation 103 adaptées au système de freinage axial par plaquettes 31, tel qu'illustré en figure 1 ou 3. Ces échancrures peuvent être supprimées avec d'autres systèmes de freinage, par fil frein par exemple.

En outre, la face supérieure 101 se prolonge par un rebord 103 qui vient en contact, sur ses côtés longitudinaux 112 et 113 avec les faces longitudinales 122 et 123 de la masselotte 12. Les côtés longitudinaux 112 et 113 du rebord 103 se prolongent, à leur tour, par des bras 114 et 115 qui viennent enserrer la masselotte 12 jusqu'à la face inférieure 125 de la voûte V1. Le plateau est monté avec un jeu autour de la masselotte. Par ce jeu et sous l'effet de la force centrifuge, la masselotte 12 va se plaquer contre le plateau 10 et par cet effet de masse, va amener ce plateau contre la zone de contact de la plateforme de l'aube. Le plateau pourra se déformer à ce contact et exercer alors une fonction de souplesse.

Le plateau 10 et la masselotte sont emboutis ou découpés à partir de tôles d'épaisseurs adaptées, c'est-à-dire correspondant aux épaisseurs respectivement déterminées pour le plateau et l'amortisseur de sorte que l'ensemble respecte la masse optimale dimensionnée pour amortir une résonance précise de la roue en fonction de ses caractéristiques. La tôle utilisée est typiquement un alliage à base de nickel.

La figure 3 illustre une vue partielle de la roue 1 dans laquelle une couronne annulaire 30 du disque 3 accueille les pieds 40 des pales 4 et les amortisseurs 2. Les flancs de la couronne 30 sont fermés par les plaquettes de frein 31 formant des sections installées par glissement dans des gorges formées dans les plateformes 5 et la couronne 30, afin de bloquer axialement le déplacement des pieds de pale 40 dans leur alvéole. Les plateformes 5 forment un anneau 50 duquel s'élancent radialement les pales 4.

L'amortisseur est bloqué, dans son logement ou cavité, latéralement par les corps d'échasse 41 (haut du pied de sapin), radialement par la plateforme 5 et axialement pas les renforts de pales 51 et 52 (cf. Figure 1)

Une partie de la figure 3 apparaît en transparence et un renfort a été retiré afin de mieux faire apparaître les amortisseurs 2 et leurs logements 20. Chaque logement 20 est formé sous les faces intérieures 51 de deux plateformes juxtaposées 5, entre deux corps d'échasse 41 de deux pieds 40 de pales 4 et une avancée ou interpale 6 de la couronne 30. Les amortisseurs exercent alors également une fonction d'étanchéité en réduisant la section de fuite inter-plateformes entre les plateformes juxtaposées.

Les masselottes 2 disposent axialement d'un degré de liberté selon l'axe Z'Z et d'un jeu - par exemple de 1/10^{ème} à quelques dixièmes de millimètre - entre le plateau 5 et la plaquette 6 et donc, sous le champ centrifuge, entre cette plaquette et la masselotte.

Sous l'effet du champ centrifuge, la turbine étant en rotation, les amortisseurs viennent se plaquer contre les faces intérieures 51 des plateformes 50, le plateau 10 se déformant élastiquement pour s'adapter au mieux au plaquage et la masselotte 12 concentrant tous les efforts pour favoriser l'effet d'amortissement en vibration par les forces de frottement, en particulier à la résonance.

L'invention n'est pas limitée à l'exemple de réalisation décrit et représenté. Il est par exemple possible de prévoir deux amortisseurs par logement dans sa longueur ou d'augmenter sensiblement la longueur de chaque amortisseur jusqu'à sensiblement celle du logement.

Par ailleurs, les pieds des pales peuvent être des pieds marteau, à la place des pieds de sapin, les logements des amortisseurs étant toujours définis par les échasses de ces pieds.

Il est possible d'appliquer l'invention sur tout ensemble de pièces liées et montées en rotation dans une turbine à gaz, en particulier sur toute turbine à gaz d'aéronefs, mais également sur turbine à gaz terrestre ou marine. Par ailleurs les dimensions sont adaptées au type et dimensions de la turbine.

De plus, les bras du plateau ou renfort pour maintenir la masselotte ne sont pas indispensables : du fait de l'élasticité du plateau, le rebord du plateau, enveloppant totalement les faces latérales du plateau, peut suffire à maintenir la masselotte en liaison avec le plateau, au moins un point de soudure ou de colle permettant la manipulation au montage.

En outre, le logement des amortisseurs peut être aménagé différemment que dans l'exemple. Ainsi, il peut être réalisé à partir de pieds de pales de formes variées.

## Revendications

1. Roue (1) d'une turbine à gaz comprenant au moins une pale (4) montée sur un disque (3) et au moins un amortisseur de vibration (2) reçu dans un logement (20) sous une plateforme (5) de la pale (4), l'amortisseur de vibration (2) comprenant un plateau (10) de plaquage contre la plateforme (5) et une masselotte (12) de concentration des efforts pour le pilotage des forces de frottement contre la plateforme (5) via le plateau (10) de plaquage, le plateau (10) et la masselotte (12) étant réalisés de manière indépendante et couplés ensemble de manière réversible, le couplage du plateau (10) et de la masselotte (12) étant formé en enveloppant au moins partiellement la masselotte (12) par au moins une zone de plaquage du plateau (10) contre la plateforme (5), le plateau (10) étant suffisamment flexible pour s'adapter au niveau de contact requis, le plateau (10) présentant une paroi supérieure (101) définissant la zone de plaquage du plateau (10) contre la plateforme (5), la paroi supérieure (101) du plateau (10) étant disposée sur une face supérieure (121) de la masselotte (12), la roue étant **caractérisée en ce que** seule la paroi supérieure (101) du plateau (10) est apte à venir se plaquer contre la plateforme (5).

2. Roue (1) selon la revendication 1, **caractérisée en ce que** le plateau (10) est monté avec un jeu autour de la masselotte (12).

3. Roue (1) selon la revendication 1 ou 2, **caractérisée en ce que** le plateau (10) est embouti à partir d'une tôle d'épaisseur sensiblement plus fine que celle de la masselotte (12), et **en ce que** la paroi supérieure (101) du plateau (10) est apte à venir en contact souple avec la plateforme (5) de pale (4) tout en enveloppant quasiment toute la face supérieure (121) de la masselotte (12).

4. Roue (1) selon la revendication 3, **caractérisée en ce que** la paroi supérieure (101) du plateau (10) est destinée à venir en contact avec les plateformes (5) de deux pales adjacentes (4).

5. Roue (1) selon l'une des revendications 3 à 4, dans laquelle le plateau (10) présente au moins deux bras (114, 115) recourbés aptes à enserrer la masselotte (12).

6. Roue (1) selon la revendication précédente, dans laquelle la masselotte (12) comporte deux piles (P1, P2) reliées par une portion centrale (V1), la portion centrale étant apte à accueillir les bras de serrage (114, 115) du plateau (10).

7. Roue (1) selon l'une quelconque des revendications 3 à 6, dans laquelle le plateau (10) a une épaisseur comprise entre 0,1 et 0,6 mm et la masselotte (12) entre 1 et 6 mm, de préférence entre 2 et 3 mm.

8. Turbine à gaz comprenant une roue (1) selon l'une des revendications 1 à 7.

## Patentansprüche

1. Rad (1) einer Gasturbine, umfassend mindestens eine Schaufel (4), die auf einer Scheibe (3) angebracht ist, und mindestens einen Schwingungsdämpfer (2), der in einer Aufnahme (20) unter einer Plattform (5) der Schaufel (4) aufgenommen ist, wobei der Schwingungsdämpfer (2) eine Platte (10) zum Anpressen gegen die Plattform (5) und eine Unwuchtmasse (12) zum Konzentrieren der Beanspruchungen für die Steuerung der Reibungskräfte gegen die Plattform (5) über die Platte (10) zum Anpressen umfasst, wobei die Platte (10) und die Unwuchtmasse (12) unabhängig ausgeführt sind und reversibel zusammengekoppelt sind, wobei die Kopplung der Platte (10) und der Unwuchtmasse (12) gebildet wird durch mindestens teilweises Umhüllen der Unwuchtmasse (12) durch mindestens einen Anpressbereich der Platte (10) gegen die Plattform (5), wobei die Platte (10) flexibel genug ist, um sich an die erforderliche Kontakthöhe anzupassen, wobei die Platte (10) eine obere Wand (101) aufweist, die den Anpressbereich der Platte (10) gegen die Plattform (5) definiert, wobei die obere Wand (101) der Platte (10) auf einer oberen Fläche (121) der Unwuchtmasse (12) angeordnet ist, wobei das Rad **dadurch gekennzeichnet ist, dass** nur die obere Wand (101) der Platte (10) fähig ist, gegen die Plattform (5) angepresst zu werden.

2. Rad (1) nach Anspruch 1, **dadurch gekennzeichnet, dass** die Platte (10) mit einem Spiel um die Unwuchtmasse (12) angebracht ist.

3. Rad (1) nach Anspruch 1 oder 2, **dadurch gekennzeichnet, dass** die Platte (10) aus einem Blech mit einer Dicke, die im Wesentlichen dünner ist als jene der Unwuchtmasse (12), tiefgezogen ist, und dadurch, dass die obere Wand (101) der Platte (10) fähig ist, in elastischen Kontakt mit der Plattform (5) der Schaufel (4) zu treten und gleichzeitig so gut wie die gesamte obere Fläche (121) der Unwuchtmasse (12) zu umhüllen.

4. Rad (1) nach Anspruch 3, **dadurch gekennzeichnet, dass** die obere Wand (101) der Platte (10) dazu bestimmt ist, mit den Plattformen (5) von zwei angrenzenden Schaufeln (4) in Kontakt zu treten.

5. Rad (1) nach einem der Ansprüche 3 bis 4, wobei die Platte (10) mindestens zwei umgebogene Arme (114, 115) aufweist, die fähig sind, die Unwuchtmasse (12) einzuklemmen.

6. Rad (1) nach dem vorstehenden Anspruch, wobei die Unwuchtmasse (12) zwei Säulen (P1, P2) umfasst, die durch einen Mittelabschnitt (V1) verbunden sind, wobei der Mittelabschnitt fähig ist, die Klemmarme (114, 115) der Platte (10) aufzunehmen.

7. Rad (1) nach einem der Ansprüche 3 bis 6, wobei die Platte (10) eine Dicke aufweist, die zwischen 0,1 und 0,6 mm beträgt, und die Unwuchtmasse (12) zwischen 1 und 6 mm, bevorzugt zwischen 2 und 3 mm.

8. Gasturbine, umfassend ein Rad (1) nach einem der Ansprüche 1 bis 7.

## Claims

1. Wheel (1) of a gas turbine comprising at least one blade (4) mounted on a disk (3) and at least one vibration damper (2) received in a housing (20) under a platform (5) of the blade (4), the vibration damper (2) comprising a plate (10) for clamping against the platform (5) and a flyweight (12) for concentrating forces for controlling frictional forces against the platform (5) via the clamping plate (10), the plate (10) and the flyweight (12) being made independently and coupled together reversibly, the coupling of the plate (10) and of the flyweight (12) being formed by surrounding at least partially the flyweight (12) by at least one area for clamping the plate (10) against the platform (5), the plate (10) being sufficiently flexible to be adapted to the required contact level, the plate (10) having an upper wall (101) defining the area for clamping the plate (10) against the platform (5), the upper wall (101) of the plate (10) being arranged on an upper face (121) of the flyweight (12), the wheel being **characterised in that** only the upper wall (101) of the plate (10) is capable of being clamped against the platform (5).

2. Wheel (1) according to claim 1, **characterised in that** the plate (10) is mounted with a clearance around the flyweight (12).

3. Wheel (1) according to claim 1 or 2, **characterised in that** the plate (10) is stamped from a metal sheet of thickness substantially thinner than that of the flyweight (12), and **in that** the upper wall (101) of the plate (10) is capable of coming into flexible contact with the blade (4) platform (5), while almost surrounding the whole upper face (121) of the flyweight (12).

4. Wheel (1) according to claim 3, **characterised in that** the upper wall (101) of the plate (10) is intended to come into contact with the platforms (5) of two adjacent blades (4).

5. Wheel (1) according to one of claims 3 to 4, wherein the plate (10) has at least two curved arms (114, 115) capable of enclosing the flyweight (12).

6. Wheel (1) according to the preceding claim, wherein the flyweight (12) comprises two pillars (P1, P2) connected by a central portion (V1), the central portion being capable of receiving the arms for clamping (114, 115) the plate (10).

7. Wheel (1) according to any one of claims 3 to 6, wherein the plate (10) has a thickness of between 0.1 and 0.6 mm and the flyweight (12) between 1 and 6 mm, preferably between 2 and 3 mm.

8. Gas turbine comprising a wheel (1) according to one of claims 1 to 7.
